Europäisches Patentamt

**European Patent Office**

**Office européen des brevets**

(11) Numéro de publication: **0 316 413 B1**

(12) **FASCICULE DE BREVET EUROPEEN**

(45) Date de publication de fascicule du brevet: **23.12.92** (51) Int. Cl.⁵: **G01N 21/53**

(21) Numéro de dépôt: **88904975.5**

(22) Date de dépôt: **25.05.88**

(86) Numéro de dépôt internationale :
**PCT/FR88/00261**

(87) Numéro de publication internationale :
**WO 88/09494 (01.12.88 88/26)**

(54) **DISPOSITIF POUR LA DETERMINATION D'AU MOINS LA CONCENTRATION DE PARTICULES SOLIDES EN SUSPENSION DANS UN FLUIDE.**

(30) Priorité: **27.05.87 FR 8707467**

(43) Date de publication de la demande:
**24.05.89 Bulletin 89/21**

(45) Mention de la délivrance du brevet:
**23.12.92 Bulletin 92/52**

(84) Etats contractants désignés:
**GB NL**

(56) Documents cités:
**EP-A-00 170 07**
**GB-A- 2 115 175**
**US-A-45 737 61**

**PROCEEDINGS OF THE SPIE, Fiber Optic and Laser Sensors III, volume 566, 1985, A.A. BOIARSKI: "Fiber optic particle concentration sensor", pages 122-125**

(73) Titulaire: **SOCIETE NATIONALE ELF AOUITAINE (PRODUCTION)**
**Tour Elf, 2, Place de la Coupole, La Défense 6**
**F-92400 Courbevoie(FR)**

(72) Inventeur: **CABAU, Daniel**
**8, rue Simone-de-Beauvoir**
**F-31320 Castanet(FR)**
Inventeur: **VIDAL, Hélène**
**215 bis, avenue Jean-Rieux**
**F-31500 Toulouse(FR)**

(74) Mandataire: **Rames, Michel**
**Société Nationale Elf Aquitaine Departement Propriété Industrielle Tour Elf**
**F-92078 Paris la Défense - Cedex 45(FR)**

PATENT ABSTRACTS OF JAPAN, vol.10,no. 225 (P-484)(2281), 6 août 1986;& JP-A-6161018

PATENT ABSTRACTS OF JAPAN, vol.11,no. 109 (P-564)(2556), 7 avril 1987;& JP-A-61259139

PROCEEDINGS OF THE INTERNATIONAL CONFERENCE ON SOLID STATES SENSORS AND ACTUATORS,Transducers '85, 1985, IEEE (New York, US), M. EL-SHERIF et al.: "Twisted pair optical fiber pH sensors", pages 434-436

**Description**

La présente invention concerne un dispositif pour la détermination d'au moins la concentration de particules solides en suspension dans un fluide, de manière a déduire notamment la densité du fluide.

Plusieurs procédés de mesure de la densité d'un fluide par exemple, sont actuellement mis en oeuvre.

Un premier procédé consiste à mesurer la densité par gammamétrie à partir d'une source radioactive. Les densimètres nucléaires dans leur grande majorité, mesurent le nombre de rayons γ émis par une source radioactive qui ont traversé un matériau sans avoir subi d'interactions. Les sources de rayonnement les plus couramment utilisées sont le $^{60}$Co et le $^{137}$Cs. Un tel procédé est très structurellement limité quant à sa mise en oeuvre et n'est réservé qu'a des applications très particulières ;

Un deuxième procédé utilise un capteur de pression différentielle et consiste à réaliser deux mesures en des endroits différents, dont l'une est la mesure de la pression hydrostatique exercé par le fluide dont on veut déterminer la densité. Connaissant ainsi la pression hydrostatique et la distance séparant les endroits de mesure, on en déduit la densité du fluide à mesurer. Toutefois, un tel procédé présente des inconvénients notamment dus à l'obturation des orifices à travers lesquels sont effectuées les mesures surtout lorsque ce fluide est fortement chargé en particules solides.

Un troisième procédé consiste à mesurer la densité par variation de l'indice de réfraction et il est décrit par exemple dans la publication "JAPANESE JOURNAL OF APPLIED PHYSICS" - vol. 21 n° 10, octobre 1982. Le principe de la mesure est la diffusion dans un liquide le long d'un coude dénudé d'une fibre optique. Le plus grave inconvénient d'un tel procédé est qu'il présente une très faible sensibilité, notamment lors d'une mesure d'un fluide chargé en particules solides.

Le document "Patent Abstracts of Japan, Vol. 10, n° 225 (p. 484) (2281), 6 August 1986 & JP-A-6 161 018 (NEC CORP) 28 March 1986 décrit un dispositif destiné à détecter la forme, la température ou la couleur de la surface d'un objet. Ce dispositif comprend deux fibres optiques qui sont disposés dans un conduit et dont les extrémités sont biseautées au même angle.

Le document "Proceedings of the SPIE, Fiber Optic and Laser Sensors III, Vol. 566, 1985, A.A. Boiarski, pages 122-125 décrit un dispositif dans lequel une source envoie de la lumière, jusqu'à un fluide dont on souhaite mesurer la densité, par l'intermédiaire de fibres optiques. Cette lumière interagit avec les particules solides puis est réémise jusqu'à une photodiode qui délivre un signal de sortie permettant de déterminer la densité.

La présente invention a pour but de remédier aux inconvénients des procédés de l'art antérieur et de proposer un dispositif qui permette de mesurer certaines caractéristiques d'un fluide comme par exemple la densité, tout en étant simple de construction et très fiable.

La présente invention a donc pour objet un dispositif, tel que décrit dans le préambule de la revendication 1, pour la détermination d'au moins la concentration de particules solides en suspension dans un fluide, et il est caractérisé en ce que le plan formant l'extrémité de la fibre optique d'émission (8) fait un angle de 30° avec un plan perpendiculaire à l'axe longitudinal de cette fibre.

Un avantage de la présente invention réside dans le fait qu'on mesure la lumière rétrodiffusée par les particules en suspension dans le fluide qui est caractéristique du nombre et de la taille de particules contenues dans ledit fluide. En fait, on détermine le rapport entre le signal mesuré en sortie et le signal de référence pris à la source de lumière incidente qui, en l'occurence est une source Laser.

D'autres avantages et caractéristiques apparaitront dans les autres revendications et à la lecture de la description de plusieurs modes de réalisation donnés à titre indicatif, mais non limitatif, ainsi que des dessins annexés sur lesquels :

La figure 1 est une représentation synoptique du dispositif selon un mode de réalisation de l'invention.

La figure 2 est une vue en bout des fibres optiques utilisées dans le dispositif de la figure 1.

La figure 3 est une vue en coupe longitudinale des fibres optiques de la figure 2 montées dans leur support.

Les figures 4a et 4b sont des vues partielles et schématiques de la rétrodiffusion de la lumière sur des particules en suspension. La figure 4a ne décrit pas un mode de réalisation de l'invention, mais seulement un capteur semblable à celui connu du document "Proceedings of the SPIE" cité à la page 2, lignes 21 à 28, de la description.

La figure 5 est une représentation graphique du signal (s) reçu en fonction de la densité (d).

La figure 6 est une vue en bout des fibres optiques suivant un autre arrangement.

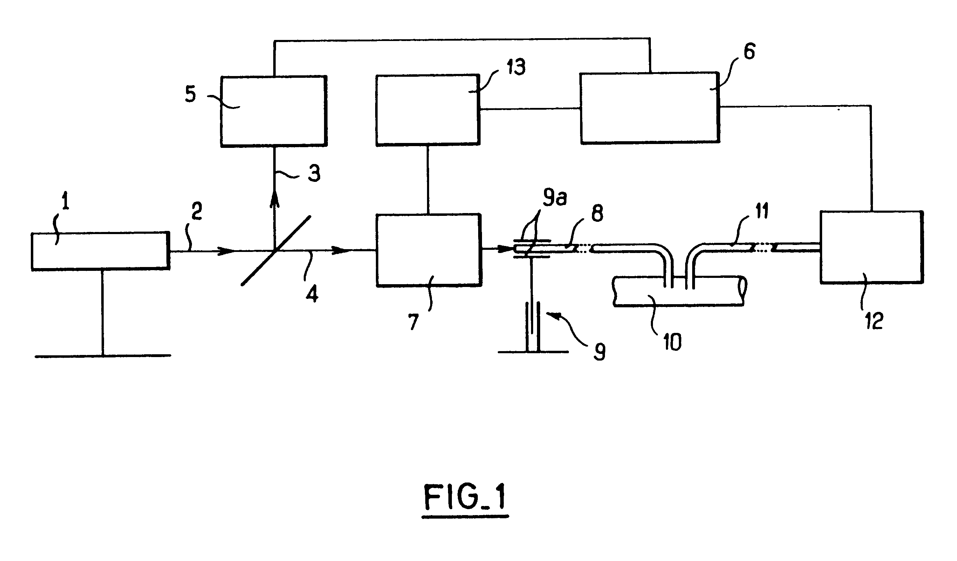

Le dispositif selon l'invention, représenté schématiquement sur la figure 1, comprend une source lumineuse, de préférence une source laser 1 hélium - néon polarisé émettant à la longueur d'onde de 630 nm une puissance de 5 mw. Le faisceau lumineux 2 produit par la source laser 1 est divisé en deux faisceaux lumineux 3,4. Le faisceau 3 est utilisé en tant que signal de référence et transite par un détecteur 5 qui est connecté à une entrée d'un amplificateur synchrone 6. Le faisceau lumineux (4) est quasiment parallèle et de faible diamètre, et il traverse un modulateur 7 avant d'être injecté dans une fibre optique d'émission 8, dont la face d'entrée a été préalablement dressée perpendiculairement à son axe et polie.

Un système de positionnement de la fibre optique 8, désigné dans son ensemble par la référence 9 est prévu de manière à injecter dans les meilleures conditions le faisceau lumineux 4 dans la fibre optique 8. Le système 9 comprend des platines (9) à deux degrés de liberté, en translation dans le plan vertical et en rotation. On peut ainsi centrer le faisceau lumineux 4 sur la face d'entrée de la fibre optique 8 afin d'injecter celui-ci dans les conditions optimales, et orienter cette face de la fibre optique 8 de manière à optimiser le signal détecté.

La fibre optique 8 débouche dans une conduite 10 dans laquelle circule le fluide dont on veut mesurer la densité. Dans une application particulière de la présente invention, on souhaite mesurer la densité de la boue de forage qui remonte d'un puits de forage. Dans ces conditions, la conduite 10 est une déviation d'une conduite de retour de boue qui relie un tube fontaine d'une tête de puits à une goulotte et un tamis vibrant disposés en amont d'un bassin ou bache de récupération de boue. Bien entendu, la conduite 10 peut être remplacée par un réceptacle quelconque dans lequel circule ou stagne un fluide.

Une fibre de réception 11 débouche à une extrémité dans la conduite 10 et la quantité de lumière qui est recueillie dans la fibre optique 11 après rétrodiffusion par des particules en suspension dans le fluide, code il sera expliqué ultérieurement, est mesurée par un photo détecteur 12 constitué d'une photodiode au silicium à sensibilité renforcée dans le domaine visible.

Une commande 13 du modulateur 7 délivre en sortie une fréquence de référence, qui est adressée à l'amplificateur synchrone 6. De ce fait, on travaille avec un signal lumineux modulé par le modulateur 7 et détecté par l'amplificateur synchrone 7 à la fréquence de référence délivrée par la commande 13.

L'amplificateur synchrone 6 comprend des moyens aptes à permettre le traitement du signal lumineux détecté par le détecteur 12, puis l'enregistrement du signal corrigé et l'affichage de la valeur de la densité mesurée.

Dans le mode de réalisation représenté sur les figures 1 à 3 et 4b, les deux fibres optiques 8 et 11 comportent chacune une âme centrale 14 dans laquelle se propage un des faisceaux lumineux incident ou rétrodiffusé, ladite âme 14 étant entourée par une gaine optique 15 qui est, elle-même, logée dans une gaine de protection externe 16.

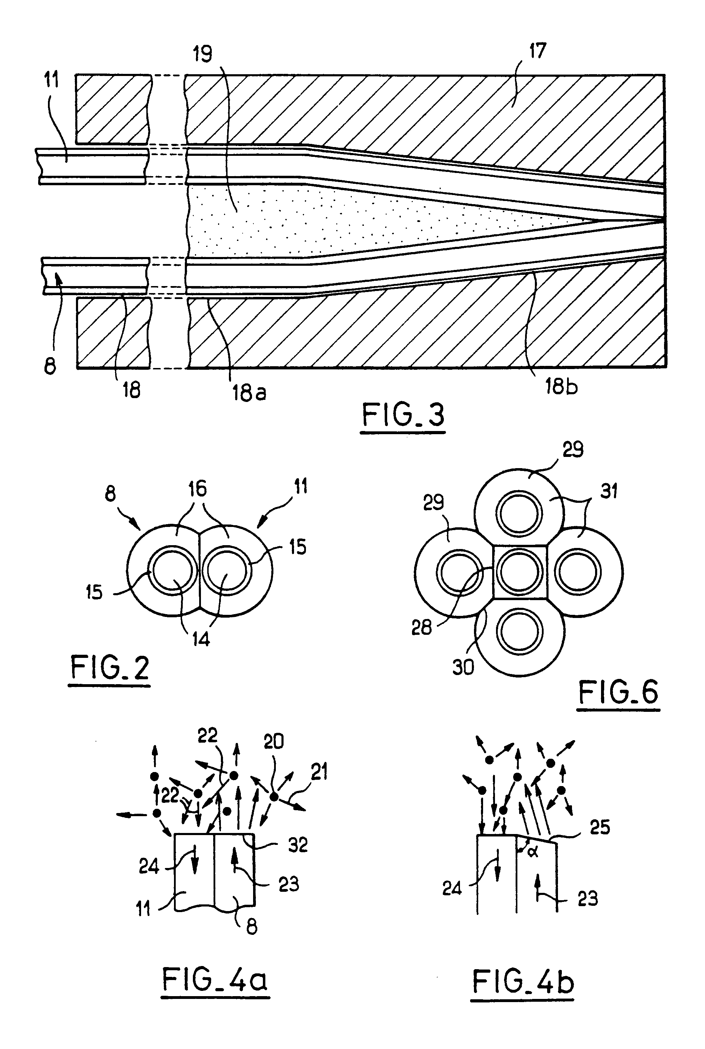

Dans l'exemple choisi, les deux fibres optiques 8 et 11 sont accolées le long d'une partie de leur gaine externe 16, de manière à rapprocher leurs axes le plus près possible l'un de l'autre de façon à récupérer le maximum de rayons rétrodiffusés, comme il sera expliqué a propos des figures 4a et 4b. Il va de soi, qu'on pourrait prévoir des fibres optiques distinctes, à condition qu'elles ne soient pas trop séparées les unes des autres.

Sur la figure 3, on a représenté un mode particulier d'assemblage des deux libres optiques 8 et 11. Chaque fibre 8, 11, est montée dans un support 17 en inox qui se présente sous la forme d'une demi-coquille pourvue d'une gorge 18 appropriée pour la réception de ladite libre optique. La gorge 18 comprend une partie sensiblement horizontale 18a, parallèle à l'axe de la fibre optique 8, 11, et une partie inclinée vers le haut 18b. Ce montage a pour but d'accoler les deux fibres optiques 8 et 11, de manière à obtenir, du côté sortie, des faces parfaitement planes. Entre les fibres optiques 8 et 11 est injectée une colle 19 qui empêche les fibres optiques de se déplacer l'une par rapport à l'autre.

Sur la figure 4a, les deux libres 8 et 11 sont identiques et accolées de la façon représentée sur la figure 2. Le faisceau incident débouchant lors de l'extrémité interne 19 tombe sur les particules 20 qui rétrodiffusent de la lumière dans toutes les directions, comme cela est matèrialisé par les flèches 21 et 22, qui représentent des faisceaux lumineux rétrodiffusés par lesdites particules. Parmi les faisceaux lumineux rétrodiffusés, une partie n'est pas récupérée ou plutôt n'est pas dirigée vers la libre optique 11. Il s'agit plus particulièrement des faisceaux lumineux 21. Les faisceaux lumineux rétrodiffusés 22 qui atteignent ou qui sont susceptibles d'être dirigés vers la fibre optique 11 sont ceux qui donnent naissance à un faisceau lumineux se propageant dans ladite fibre optique 11 et qui sera mesuré ultérieurement par les moyens de mesure et de traitement. Les faisceaux lumineux incidents et rétrodiffusés se propageant dans les fibres optiques 8 et 11 sont respectivement matérialisés par les flèches 23, 24.

De manière à améliorer le facteur de rétrodiffusion ou à permettre à une plus grande quantité de lumière rétrodiffusée de parvenir à la fibre optique de réception 11, on réalise l'extrémité interne 32 de la fibre optique d'émission 8 sous la forme d'un biseau 25, comme cela est représenté sur la figure 4b. De cette façon, on oriente le faisceau lumineux incident 23, à la sortie de l'extrémité biseautée 25 vers les particules en suspension 20 aptes à rétrodiffuser le plus possible de la lumière vers la fibre optique de réception 11. De préférence, l'angle $\alpha$ du biseau 25 est d'environ 60°.

Dans tous les cas, le faisceau total rétrodiffusé 24 est converti en un signal électrique qui est mesuré par les moyens de mesure représentés sur la figure 1. Le faisceau lumineux incident 23 est également converti en un signal électrique et mesuré par des moyens de mesure distincts ou identiques et inclus dans les moyens de mesure. Après quoi, on mesure le rapport des signaux dûs aux faisceaux lumineux incidents et rétrodiffusés 23 et 24. La détermination d'un tel rapport, après étalonnage, permet de connaître avec précision la nature des particules solides 20 en suspension dans le fluide, comme par exemple la forme et le nombre. Connaissant le nombre de particules, on peut en déduire la densité du fluide par des techniques bien connues de l'homme de l'art et qui ne seront donc pas décrites.

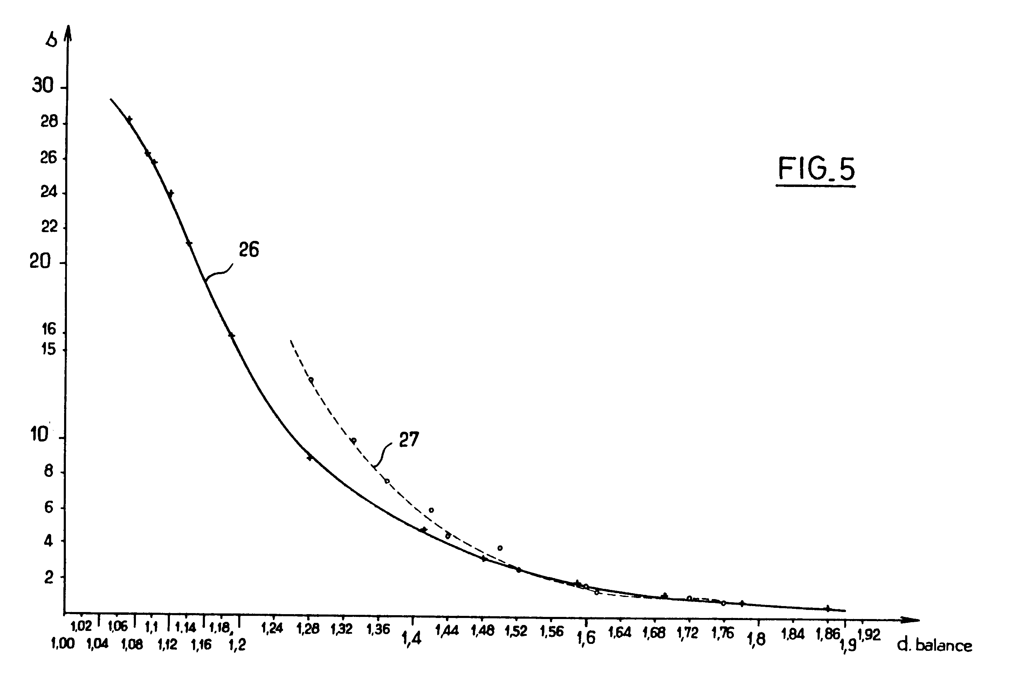

Sur la figure 5, on a représenté un signal en fonction de la densité pour différentes expérimentations effectuées. En abscisse sont portées les valeurs de la densité lues à la balance à boue, après un étalonnage à l'eau, et en ordonnées sont portés les rapports du signal de lecture en sortie de la fibre réceptrice sur le signal de référence, les signaux étant mesurés en mV.

La courbe en trait plein 26 est obtenue lors d'une expérimentation avec une boue de base à d = 1,07 alourdie successivement avec de la baryte jusqu'à l'obtention d'une densité de 1,88, la vitesse d'écoulement dans la conduite étant de 0,5 m.s⁻¹.

La courbe en trait pointillé 27 est obtenue avec une boue de base à d = 1,76, qui est diluée par apport d'eau dans le circuit. On constate que pour des densités comprises entre 1,52 et 1,76 les deux courbes 26 et 27 se confondent. De ce fait, on admet facilement que la venue d'eau en cours de forage fera varier le signal reçu de la même façon que l'essai de dilution représenté par la courbe 27. De même, toute venue d'un autre fluide en cours de forage et qui fera varier la densité de la boue de forage pourra être détectée grâce à la présente invention.

Suivant d'autres modes de réalisation de l'invention, on peut avoir une ou plusieurs fibres optiques d'émission analogues à la fibre optique 8 et une ou plusieurs fibres optiques de réception analogues à la fibre optique 11, qui peuvent être accolées ou non. Le mode de réalisation représenté sur la figure 6 comprend une fibre optique centrale d'émission 28 entourée de plusieurs fibres optiques de réception 29 accolées d'une part sur la fibre optique centrale 28 et, d'autre part, entre elles le long de parties 30 des gaines externes 31.

Les fibres optiques sont représentées sur les figures avec des sections circulaires, mais il va de soi que d'autres sections peuvent être envisagées pour autant qu'elles soient aptes à transmettre une émission et une rétrodiffusion de la lumière émise sur les particules solides du fluide dont on veut connaître les caractéristiques. C'est ainsi qu'on pourrait utiliser des fibres optiques à extrémité concave et/ou convexe de manière à focaliser la lumière rétrodiffusée sur la fibre optique de réception.

De même, les fibres optiques pourraient faire un faible angle entre elles et ne pas être parallèles comme représenté sur les figures.

Dans tous les modes de réalisation représentés sur les figures 1 à 6, le diamètre des fibres optiques est compris entre 0,1 micron et quelques millimètres et de préférence présentant un diamètre de 1 mm avec une ouverture angulaire de 20° qui permet d'injecter le maximum de puissance lumineuse et de recueillir la plus grande fraction possible de la puissance lumineuse rétrodiffusée.

## Revendications

1. Dispositif pour la détermination d'au moins la concentration de particules solides (20) en suspension dans un fluide, du type comprenant au moins une fibre optique d'émission (8) pour le passage d'un faisceau de lumière incident dans le fluide, ladite lumière incidente étant au moins en partie rétrodiffusée par les particules solides en suspension, au moins une fibre optique de réception (11) pour recueillir la partie de lumière rétrodiffusée, lesdites fibres optiques d'émission et de réception étant situées suivant des axes parallèles, et des moyens (5,6,7,12,13) pour mesurer la quantité de lumière rétrodiffusée pour en déduire la concentration de particules en suspension dans ledit fluide, les fibres optiques (8,11) étant collées l'une contre l'autre le long d'une partie de leur périphérie, le plan formant l'extrémité de la fibre optique de réception (11) est perpendiculaire à l'axe longitudinal de celle-ci, caractérisé en ce que le plan formant l'extrémité de la fibre optique d'émission (8) fait un angle de 30° avec un plan perpendiculaire à l'axe longitudinal de cette fibre.

2. Dispositif selon la revendication 1, caractérisé en ce que les fibres optiques (8, 11) sont séparées par une faible distance transversale.

3. Dispositif selon la revendication 1, caractérisé en ce qu'il comprend une fibre d'émission centrale (28) entourée de plusieurs fibres de réception (29).

4. Dispositif selon l'une des revendications 1 à 3, caractérisé en ce que chaque fibre optique (8, 11, 28, 29) est logée dans une gaine de protection (16, 31).

**5.** Dispositif selon l'une des revendications 1 à 4, caractérisé en ce que les fibres optiques sont cylindriques et présentent un diamètre compris entre quelques dizaines de microns et quelques millimètres.

**6.** Dispositif selon l'une des revendications 1 à 5, caractérisé en ce qu'au moins la fibre optique d'émission (8) est montée sur des moyens de positionnement (9) de manière à aligner l'axe de ladite fibre optique (8) avec celui du faisceau lumineux incident.

**7.** Dispositif selon l'une des revendications 1 à 6, caractérisé en ce que l'extrémité de chaque fibre optique en contact avec le fluide est montée dans un support (17).

**8.** Dispositif selon l'une des revendications 1 à 7, caractérisé en ce que chaque fibre (8, 11) est montée dans un support (17) comportant une partie sensiblement horizontale (18a) et parallèle à l'axe de ladite fibre optique et une partie inclinée (18b), les parties inclinées des fibres optiques convergeant l'une vers l'autre de manière à obtenir des faces planes.

**9.** Dispositif selon la revendication 8, caractérisé en ce que de la colle (19) est injectée entre les fibres optiques.

## Claims

**1.** Device for determining at least the concentration of solid particles (20) in suspension in a fluid, of the type comprising at least one emitting optic fibre (8) for passing a beam of incident light through the fluid, the said incident light being at least partly scattered by the solid particles in suspension, at least one receiving optic fibre (11) for receiving the part of light that has been scattered, the said emitting and receiving optic fibres being located along parallel axes, and means (5, 6, 7, 12, 13) for measuring the quantity of scattered light to deduce the concentration of particles in Suspension in the said fluid, the optic fibres (8, 11) being adhered to one another along one part of their periphery, the flat part forming the end of the receiving optic fibre (11) is perpendicular to the longitudinal axis thereof, characterised in that the flat part forming the end of the emitting optic fibre (8) forms an angle of 30° with a flat piece that is perpendicular to the longitudinal axis of this fibre.

**2.** Device according to Claim 1, characterised in that the optic fibres (8, 11) are separated by a small transverse distance.

**3.** Device according to Claim 1, characterised in that it comprises a central emission fibre (28) surrounding a plurality of receiving fibres (29).

**4.** Device according to one of Claims 1 to 3, characterised in that each optic fibre (8, 11, 28, 29) is located in an insulating tube (16, 31).

**5.** Device according to one of Claims 1 to 4, characterised in that the optic fibres are cylindrical and have a diameter of between a few dozen microns and a few mm.

**6.** Device according to one of Claims 1 to 5, characterised in that at least one emitting optic fibre (8) is mounted on the positioning means (9) in a manner as to align the axis of the said optic fibre (8) with that of the beam of incident light.

**7.** Device according to one of Claims 1 to 6, characterised in that the end of each optic fibre in contact with the fluid is mounted in a support (17).

**8.** Device according to one of Claims 1 to 7, characterised in that each fibre (8, 11) is mounted in a support (17) comprising a part (18a) that is approximately horizontal and is parallel to the axis of the said optic fibre and an inclined part (18b), the inclined parts of the optic fibres converging towards one another in such a manner that plane surfaces are obtained.

**9.** Device according to Claim 8, characterised in that adhesive (19) is injected between the optic fibres.

## Patentansprüche

**1.** Vorrichtung zur Bestimmung wenigstens der Konzentration von in einem Fluid suspendierten festen Teilchen (20) des Typs, welcher
- wenigstens eine optische Emissionsfaser (8) für den Durchgang eines in das Fluid einfallenden Lichtstrahls, wobei das einfallende Licht wenigstens zum Teil durch die suspendierten festen Teilchen rückgestreut wird,
- wenigstens eine optische Empfangsfaser (11) zum Sammeln des Teils an ruckgestreutem Licht, wobei die optischen Emissions- und Empfangsfasern längs paralleler Achsen angeordnet sind, und

- Einrichtungen (5, 6, 7, 12, 13) zum Messen der Menge von rückgestreutem Licht aufweist, um daraus die Konzentration von in dem Fluid suspendierten Teilchen abzuleiten,
- wobei die optischen Fasern (8, 11) längs eines Teils ihres Umfangs aneinander geklebt sind,
- wobei die das Ende der optischen Empfangsfaser (11) bildende Ebene senkrecht zu deren Längsachse ist,

dadurch gekennzeichnet, daß die das Ende der optischen Emissionsfaser (8) bildende Ebene einen 30°-Winkel mit einer zur Längsachse dieser Faser senkrechten Ebene bildet.

2. Vorrichtung nach Anspruch 1, dadurch gekennzeichnet, daß die optischen Fasern (8, 11) durch einen geringen Querabstand getrennt sind.

3. Vorrichtung nach Anspruch 1, dadurch gekennzeichnet, daß sie eine zentrale Emissionsfaser (28) aufweist, die von mehreren Empfangsfasern (29) umgeben ist.

4. Vorrichtung nach einem der Ansprüche 1 bis 3, dadurch gekennzeichnet, daß jede optische Faser (8, 11, 28, 29) in einer Schutzhülle (16, 31) gelagert ist.

5. Vorrichtung nach einem der Ansprüche 1 bis 4, dadurch gekennzeichnet, daß die optischen Fasern zylindrisch sind und einen Durchmesser zwischen einigen zehn $\mu$m und einigen mm hat.

6. Vorrichtung nach einem der Ansprüche 1 bis 5, dadurch gekennzeichnet, daß wenigstens die optische Emissionsfaser (8) auf einer Positionierungseinrichtung (9) so angebracht ist, daß die Achse der optischen Faser (8) mit der des einfallenden Lichtstrahls ausgerichtet ist.

7. Vorrichtung nach einem der Ansprüche 1 bis 6, dadurch gekennzeichnet, daß das Ende jeder optischen Faser, das in Kontakt mit dem Fluid steht, in einem Träger (17) angebracht ist.

8. Vorrichtung nach einem der Ansprüche 1 bis 7, dadurch gekennzeichnet, daß jede Faser (8, 11) in einem Träger (17) angebracht ist, welcher einen im wesentlichen horizontalen (18a) und zur Achse der optischen Faser parallelen Teil und einen geneigten Teil (18b) aufweist, wobei die geneigten Teile der optischen Fasern so zueinander konvergieren, daß ebene Flächen erzielt werden.

9. Vorrichtung nach Anspruch 8, dadurch gekennzeichnet, daß zwischen die optischen Fasern Klebemittel (19) eingespritzt ist.

FIG_1

EP 0 316 413 B1

FIG.3

FIG.2

FIG.6

FIG.4a

FIG.4b

FIG.5

EP 0 316 413 B1